Europäisches Patentamt

**European Patent Office**

**Office européen des brevets**

(19)

(11) Numéro de publication : **0 128 165 B1**

(12) **FASCICULE DE BREVET EUROPÉEN**

(45) Date de publication du fascicule du brevet :
**30.09.87**

(21) Numéro de dépôt : **83903801.5**

(22) Date de dépôt : **06.12.83**

(86) Numéro de dépôt international :
**PCT/FR 83/00243**

(87) Numéro de publication internationale :
**WO/8402335 (21.06.84 Gazette 84/15)**

(51) Int. Cl.⁴ : **C 04 B 35/02**, C 04 B 35/56, C 25 C 3/08, C 21 B 7/06

(54) **PRODUITS REFRACTAIRES CONSTITUES DE GRAINS LIES PAR DES RESIDUS CARBONES ET DU SILICIUM METAL EN POUDRE, ET PROCEDE DE FABRICATION.**

(30) Priorité : **08.12.82 FR 8220893**

(43) Date de publication de la demande :
**19.12.84 Bulletin 84/51**

(45) Mention de la délivrance du brevet :
**30.09.87 Bulletin 87/40**

(84) Etats contractants désignés :
**DE FR GB**

(56) Documents cités :
**US-A- 2 013 625**
**US-A- 3 291 623**
**US-A- 3 442 989**
**Chemical Abstracts, Vol. 83, No. 18, 03 November 1975 (Columbus, Ohio, US) voir page 268, abrégé No. 151364m**
**Chemical Abstracts, Vol. 93, No. 20, November 1980 (Columbus, Ohio, US) voir page 288, abrégé No. 190927y**
**Chemical Abstracts, Vol. 94, No. 8, 23 February 1981 (Columbus, Ohio, US) voir page 289, abrégé No. 51800j**

(73) Titulaire : **SOCIETE DES ELECTRODES ET REFRACTAIRES "SAVOIE" (SERS)**
**Tour Manhattan 6 place de l'Irsis**
**F-92400 Courbevoie (FR)**

(72) Inventeur : **DUMAS, Daniel**
**6, route d'Heyrieux**
**F-69800 Saint-Priest (FR)**
Inventeur : **DU MESNILDOT, Bruno**
**73, rue de la Centrale Chedde**
**F-74190 Le Fayet (FR)**
Inventeur : **MICHEL, Christian**
**28, rue Claude Jusseaud**
**F-69110 Sainte-Foy-lès-Lyon (FR)**

(74) Mandataire : **Pascaud, Claude et al**
**PECHINEY 28, rue de Bonnel**
**F-69433 Lyon Cedex 3 (FR)**

EP 0 128 165 B1

**0 128 165**

### Description

La présente invention concerne des produits réfractaires pouvant être utilisés soit dans les cellules d'électrolyse d'aluminium — en particulier sous forme de blocs ou dalles composant la bordure de ces cellules —, soit dans les garnissages des hauts-fourneaux ou des fours d'électrothermie.

Dans le cas des cellules d'électrolyse de l'aluminium, l'introduction des fortes intensités a entraîné une usure accélérée des bords de cellules réalisés avec les produits existants, et il est apparu le besoin d'avoir des produits réfractaires encore plus résistants dans ces nouvelles conditions de service, tout en restant acceptables sur le plan économique.

Les qualités recherchées pour de tels produits réfractaires, dans ce cas particulier des bordures des cellules d'électrolyse d'aluminium, correspondent à des critères tels que :

une résistivité électrique élevée, pour limiter les dérivations de courant par les bordures des cellules ;

une bonne conductivité thermique, pour favoriser la formation et le maintien d'une croûte d'aluminium solidifié le long des bordures des cellules et limiter ainsi les contacts avec l'aluminium en fusion et la cryolithe fondue ;

une bonne résistance à l'écrasement, critère important vis-à-vis de la tenue à l'érosion de ces bordures de cellules ;

une bonne tenue à l'oxydation ;

une bonne tenue au bain fluoré (à la cryolithe fondue).

Si ces deux derniers critères peuvent faire l'objet de tests de laboratoires donnant de premières indications d'ordre comparatif, seuls les tests d'utilisation réelle peuvent permettre de se faire une opinion plus précise sur le comportement du matériau en service, pour lequel interviennent des mécanismes d'oxydation-érosion avec présence de contraintes thermiques et attaques occasionnelles par la cryolithe fondue.

Dans le cas des garnissages de hauts-fourneaux, les qualités recherchées sont :

une bonne résistance à l'érosion par la fonte liquide,

une bonne résistance à l'oxydation,

une résistance mécanique élevée,

une conductivité thermique élevée pour rendre efficace l'action du garnissage.

Les exigences sont analogues pour les fours d'électrométallurgie (élaboration d'aciers et de ferro-alliages notamment).

Pour la fabrication des produits réfractaires destinés à ces deux types d'utilisation, on fait le plus souvent appel à des techniques d'agglomération et de cuisson, en partant notamment de grains de carbure de silicium dans le cas des blocs de bordure des cuves d'électrolyse d'aluminium, et en partant notamment de grains d'alumine ou d'aluminates dans le cas des blocs de garnissage de hauts-fourneaux et des blocs de garnissage de fours d'électrothermie.

Les procédés de fabrication des blocs réfractaires ayant pour constituant essentiel du carbure de silicium visent à obtenir soit du carbure de silicium dans toute la masse, soit du carbure de silicium associé à du nitrure ou de l'oxynitrure de silicium, et ces procédés partent d'un mélange composé essentiellement de carbure de silicium en grains, de silicium en poudre et de produits carbonés, la quantité de silicium et la quantité de carbone libéré par la cokéfaction étant dans un rapport devant favoriser la formation de carbure de silicium associé ou non à du nitrure et de l'oxynitrure de silicium.

Ainsi, dans le procédé décrit par la demande de brevet DE-A-2 232 719, concernant des blocs réfractaires employés dans les hauts-fourneaux, la composition est normalement ajustée de façon que la quantité de poudre de silicium ajoutée au matériau de départ et la quantité de coke formé à partir du brai, éventuellement complétée par un ajout de poudre fine de coke, se correspondent stoechiométriquement, et l'amélioration de résistance des blocs réfractaires cuits dans des fours de cuisson des produits carbonés à des températures finales atteignant 1 100 à 1 300 °C est due à ce que l'ossature du liant cuit se compose de carbure de silicium qui prend naissance aux températures supérieures du processus de cuisson, par réaction du silicium avec le coke formé par cokéfaction.

Dans la demande de brevet FR-A-2 286 806, il est indiqué que le procédé décrit par la demande DE-A-2 232 719 peut être amélioré, la matière liante obtenue ayant une structure qui adhère insuffisamment aux surfaces des joints de grains de SiC et qui contient encore du silicium métallique et/ou du carbone. Dans le procédé décrit dans cette demande de brevet FR-A-2 286 806, on favorise la formation de SiC sensiblement pur c'est-à-dire non mélangé de silicium métallique, de carbone libre ou de $SiO_2$, en diluant le brai avec une huile de goudron fluide de façon à améliorer le contact de ce liant avec les grains de SiC, et on effectue la cuisson entre 1 305 et 1 400 °C, par exemple 48 heures à une température de brique de 1 320 °C. On indique qu'il est préférable d'avoir un rapport en poids du liant au silicium, dépendant du carbone réactif libéré par cokéfaction, compris entre 0,8 et 3,0 et de préférence entre 1,0 et 1,5.

Dans le procédé décrit par la demande de brevet JP-A-55-80779/80, les grains de silicium sont protégés de l'oxydation lors du chauffage grâce à un bon recouvrement de leur surface par un liant de qualité étudiée et le rapport pondéral entre le silicium métal en poudre et le carbone résiduel du brai doit être compris entre 3/1 et 6/1. Après l'étape de cokéfaction au-dessus de 450 °C qui assure un contact

2

intime entre le C résiduel du brai et la surface des grains de silicium métal, le chauffage est poursuivi à haute température dans l'air ou dans un mélange gazeux contenant de l'azote, et il aboutit à la formation de SiC à partir de C résiduel et de Si débutant à des températures supérieures à 1 100 °C — et à la formation de $Si_3N_4$ et de $Si_2ON_2$ — commençant à partir de 1 000 à 1 100 °C. Dans le cas d'un bloc de 120 × 200 × 400 mm traité pendant 30 heures à 1 400 °C après une montée en température de 20 °C par heure, avec soufflage de gaz contenant de l'azote au-dessus de 1 000 °C, on a obtenu ainsi grâce à la liaison mixte ($SiC$, $Si_3N_4$, $Si_2ON_2$) une résistance à l'écrasement de 2 070 kg/cm² (203 MPa) ainsi que de très bonnes résistances à l'abrasion, à l'écaillage après immersion dans la fonte à 1 500 °C, et à la corrosion par un bain de cryolithe à 1 000 °C.

Ainsi, les procédés visant à obtenir après cuisson des produits réfractaires essentiellement constitués de carbure de silicium — éventuellement associé à du nitrure ou de l'oxynitrure de silicium- à partir d'un mélange contenant du silicium en poudre font appel à diverses précautions pour éviter ou limiter l'oxydation, améliorer le contact entre grains de silicium et le liant carboné et ajuster au mieux les quantités respectives de silicium et de carbone issu de la cokéfaction, tout cela afin de favoriser la formation de carbure de silicium, et ces procédés utilisent de préférence des températures de cuisson de plus de 1 300 °C, avec des durées de traitement pouvant dépasser 24 heures. Par comparaison, les procédés de fabrication de produits réfractaires composés de grains de carbure de silicium agglomérés par une « liaison carbonée » emploient habituellement des conditions de cuisson plus économiques et en particulier des températures de cuisson plus faibles comprises entre 900 et 1 150 °C et donnent habituellement des produits moins performants, par exemple dans le cas des blocs de bordure des cellules d'électrolyse d'aluminium à forte intensité.

Ainsi, par le procédé décrit dans le brevet US-A-3 442 989, on obtient des produits essentiellement à base de carbure de silicium avec une « liaison carbonée » en partant d'un mélange de particules de SiC, de 4 à 12 % de liant carboné — en particulier du brai — et de 0,5 à 10 % de soufre, et en faisant la cuisson des produits de préférence entre 900 et 1 200 °C. Le rôle de l'addition de soufre serait double : le soufre rendrait le brai plus fluide, et en outre il se combinerait avec l'hydrogène du brai sous forme de $H_2S$, lequel favoriserait la formation d'une résine riche en carbone à partir du carbone contenu dans le brai. En partant du mélange donné en exemple contenant 6 % de brai et 2 % de soufre, on a obtenu après cuisson les caractéristiques suivantes : densité 2,70 g/cm³ — résistivité électrique de 200 milliohm × cm — résistance à l'écrasement de l'ordre de 450 kg/cm² (55,1 MPa).

Dans le procédé décrit par ELETTROCARBONIUM dans sa publication au Congrès de l'A.I.M.E; à Dallas en février 1982, on part de carbure de silicium et d'un liant constitué par un mélange de brais avec environ 5 % d'un « composé inorganique » réduisant l'oxydation du liant après cokéfaction. Les blocs réfractaires obtenus après cuisson ont des caractéristiques de résistivité électrique (84 à 95 milliohm × cm), de résistance à l'écrasement (640 à 700 kg/cm² = 62,7 à 68,6 MPa) et de résistance à l'oxydation à 550 °C nettement meilleures que celles des blocs carbonés usuels.

Ces deux publications montrent que la qualité des produits réfractaires composés de grains de SiC agglomérés par une liaison carbonée a pu être améliorée essentiellement en modifiant la qualité du liant afin de la rendre plus fluide et de lutter contre l'oxydation.

Enfin, dans la demande de brevet japonais JP-A-75-00007 (TOSHIBA CERAMICS C° Ltd), on décrit un produit réfractaire pour busettes de coulée d'acier obtenu par cuisson d'un mélange de 20 à 70 % d'alumine, de 5 à 70 % de graphite, de 5 à 40 % de carbure de silicium, et de 1 à 20 % de silicium métal, à une température non précisée mais supérieure au point de fusion du silicium métal, qui est, au cours de la cuisson, transformé en silice dont le rôle est d'empêcher l'obstruction des busettes de coulée par l'alumine, lorsqu'on coule des aciers à teneur en Al relativement élevée.

La présente invention concerne un nouveau produit réfractaire à haute résistance à l'écrasement et à la traction, à conductivité thermique améliorée, à résistivité électrique augmentée (100 à 300 m $\Omega \cdot$ cm), à faible porosité, résistant bien à l'oxydation à l'air et aux constituants des bains d'électrolyse ignée pour la production d'aluminium, ainsi qu'à l'érosion par la fonte liquide dans les hauts-fourneaux. Ce produit est constitué après cuisson, sous couverture de grains carbonés, entre 950 et 1 150 °C, par l'association d'une charge de grains réfractaires et d'un liant. Les grains réfractaires appartiennent au groupe comprenant les produits carbonés tels que l'anthracite, le graphite naturel, le graphite artificiel, le carbone amorphe et le coke, les composés réfractaires habituellement désignés par l'abréviation « R.H.M. » (refractory hard metals), désignant les carbures et borures de métaux dits de « transition » auxquels on ajoute le silicium (voir p. ex. BILLEHAUG. K et OYE, H.A. Aluminium (RFA), 56, oct. 1980, pages 643 et suivantes), et parmi ces « R.H.M. », plus particulièrement, le carbure de silicium, et enfin les oxydes réfractaires tels que l'alumine et le corindon, la magnésie, la silice, et l'oxyde de chrome, pris séparément, en mélange ou en combinaison, ces grains étant solidarisés par un ciment à base de résidu carboné, et de silicium métal, le résidu carboné provenant de la cokéfaction du liant de base tel que brai ou goudron, résine thermodurcissable (formo-phénolique par exemple) ou autre liant organique pyrolysable avec formation de coke, et le silicium métal étant sous forme de poudre, à une teneur comprise entre 1 et 15,8 %, et, de préférence, entre 3,2 et 10,5 %.

La charge des grains réfractaires peut être constituée soit en totalité par des grains carbonés, soit par un mélange de 10 à 20 % de grains de RHM et de 90 à 80 % de produit carboné, soit par un mélange de 45 à 100 % de grains de RHM et 55 à 0 % de grains carbonés. Dans les deux cas, une partie au moins des grains de RHM et/ou des grains carbonés peut être remplacée par des grains en oxydes réfractaires tels qu'ils ont été définis ci-dessus.

Il a en effet été trouvé que, dans les conditions habituelles de cuisson des électrodes de carbone, les produits réfractaires élaborés à partir de grains réfractaires tels que des grains de carbure de silicium et d'un liant carboné tel que du brai avaient une très mauvaise résistance à l'écrasement, et que, lorsque du silicium métal en poudre était ajouté au mélange du départ, la résistance à l'écrasement des produits réfractaires élaborés selon le même processus était améliorée de façon surprenante, passant par exemple de 6,6 à 107,8 MPa (exemple 1). Une observation microscopique sur un échantillon de liant cuit à 1 050 °C a permis de conclure que cette amélioration surprenante était liée à la bonne adhérence des grains de silicium métal aux résidus carbonés, et que ces grains de silicium étaient restés à l'état métallique, et un examen complémentaire de diffractométrie aux rayons X n'a pas permis de déceler du carbure de silicium dans ce produit. C'est donc cette structure particulière du liant cuit, formant ciment, c'est-à-dire de la matrice enchâssant les grains réfractaires dans le produit réfractaire cuit, qui est pour l'essentiel responsable de l'amélioration spectaculaire de la résistance à l'écrasement entraînée par l'addition de silicium métal en poudre au mélange de départ. Et le silicium n'est pas utilisé dans la présente invention pour la formation de carbure de silicium comme dans les procédés décrits par les demandes de brevets DE-A-2 232 719 et FR-A-2 286 806, ou pour la formation de carbure de silicium associé à du nitrure et de l'oxynitrure de silicium comme dans le procédé décrit par la demande de brevet JP-A-55 80779/80, mais le silicium reste présent à l'état métallique et semble intervenir comme renforçateur du liant cuit de la même façon que le gravier renforce le béton. On comprend donc que la présente invention puisse s'appliquer aux diverses qualités de grains réfractaires et en particulier aux grains carbonés, aux grains de RHM tels que le carbure de silicium, aux grains d'oxydes réfractaires tels qu'on les a précédemment définis.

On comprend également que le rôle de renforcement du liant cuit par le silicium métallique en poudre ne nécessite pas de correspondance stoechiométrique entre la quantité de silicium et celle de carbone résiduel, ce qui constitue une simplification appréciable pour les conditions de fabrication.

La présente invention concerne également le procédé de fabrication d'un produit réfractaire, à base de grains réfractaires et de liant, procédé selon lequel on prépare, par malaxage, un mélange de départ constitué de :

| | |
|---|---|
| charge de grains réfractaires | 70 à 95 % en poids |
| brai et/ou goudron et/ou résine | 4 à 20 % en poids |
| silicium métal en poudre | 1 à 15 % en poids |

les grains réfractaires appartenant au groupe comportant les R.H.M. tels que le carbure de silicium, les produits carbonés que anthracite, graphite naturel ou artificiel, carbone amorphe, coke, les oxydes réfractaires tels que alumine, corindon, magnésie, silice, oxyde de chrome, pris séparément, en mélange ou en combinaison, le brai ou goudron ou la résine, et le silicium métal étant destiné à former le liant, en ce que l'on met le mélange en forme et en ce qu'on effectue la cuisson entre 950 et 1 150 °C.

Le procédé de fabrication est celui utilisé dans la fabrication des électrodes de carbone. Il comprend typiquement les opérations suivantes : malaxage des produits à environ 150 °C, mise en forme à environ 110 °C, par un procédé tel que filage à la presse, compression isostatique, pilonnage ou vibrotassage, cuisson dans un four sous couverte de granulés de carbone. La cuisson est effectuée de préférence entre 1 000 et 1 090 °C. La teneur finale en silicium est comprise entre 1 et 15,8 %.

De préférence le mélange de départ est constitué de :

| | |
|---|---|
| charge de grains réfractaires tels que définis ci-dessus, au total | 75 à 90 % en masse |
| brai et/ou goudron, et/ou résine | 6 à 14 % en masse |
| Si métal en poudre | 3 à 10 % en masse |

et le produit obtenu a alors une teneur en Si comprise entre 3,2 et 10,5 %.

L'invention concerne enfin, des blocs réfractaires mixtes dont une partie — par exemple sur une face — est constituée par un premier produit réfractaire selon l'invention et dont une autre partie — par exemple la face opposée — est constituée par un second produit réfractaire de composition différente, connue, ou entrant dans le champ de la présente invention, à base de produit carboné ou de composé oxydé réfractaire, ce qui permet de réaliser des garnissages dans lesquels chaque face est adaptée aux conditions particulières de température, de résistance à la corrosion ou à l'oxydation, ou de tout autre facteur physique ou chimique. Selon ce même principe, on peut confectionner des blocs mixtes formés par la superposition de trois couches (ou plus) de produits réfractaires, la ou les couche(s) intermédiaire(s) ayant une propriété physique, par exemple, le coefficient de dilatation, de valeur intermédiaire entre la même propriété des deux couches extrêmes, de façon à éviter, par exemple, les ruptures par contraintes thermiques, l'une au moins des couches de produit réfractaire ayant une composition selon la présente invention.

## Exemple 1

Les essais comparatifs du tableau I ci-après portent sur quatre échantillons Ø 60 × h 100 mm malaxés à 150 °C, comprimés sous 50 MPa et cuits 5 h à 1 050 °C sous couverte de granulés de carbone.

4

Tableau I

| Repère de l'échantillon | | A | B | C | D |
|---|---|---|---|---|---|
| Type de produit réfractaire obtenu | | anthracite liée coke de brai | SiC lié coke de brai | SiC lié coke de brai + Si | SiC amorphe + SiC cristallisé coke de brai + Si |
| Composition du mélange de départ (% en masse) | | | | | |
| | mesh (mm) | | | | |
| SiC cristallisé | 14/24 (0,59 à 1,16) | | 40,5 | 40,5 | 16 |
| SiC cristallisé | <100 ( < 0,15 | comme fabrication industrielle | 40,5 | 40,5 | 16 |
| SiC cristallisé | <400 ( < 0,037) | | 7 | 0 | 0 |
| SiC amorphe | < 12 ( < 1,65 ) | | 0 | 0 | 49 |
| Si | <300 ( < 0,05 ) | | 0 | 7 | 7 |
| Brai de houille | | | 12 | 12 | 12 |
| d (g/cm$^3$) | | 1,56 | 2,25 | 2,22 | 2,20 |
| $R_E$ (MPa) | | 29,4 | 6,6 | 107,8 | 43,1 |
| $R_T$ (MPa) | | 2,9 | 0,6 | 9,8 | 3,5 |
| $\rho$ (milliohm x cm) | | 5 | 380 | 158 | 139 |

0 128 165

La comparaison des résultats des échantillons B et C montre l'effet remarquable de l'addition de silicium sur la résistance à l'écrasement « $R_E$ » et sur la résistance à la traction « $R_T$ » du produit réfractaire C selon l'invention à base de grains de carbure de silicium. L'échantillon C surclasse l'échantillon A qui représente la fabrication industrielle des électrodes de carbone, aussi bien en résistance à l'écrasement et en résistance à la traction qu'en résistivité électrique « ρ ».

Dans l'échantillon D selon l'invention, la majeure partie du SiC cristallisé a été remplacée par du SiC « amorphe » de pureté inférieure ; la résistance à l'écrasement et la résistance à la traction obtenues sont alors plus faibles que celles de C mais meilleures que celles de A, ce qui illustre l'intérêt éventuel de l'utilisation de mélanges de grains réfractaires de diverses qualités dans un souci économique.

## Exemple 2

On a préparé un échantillon ⌀ 60 × h 100 mm de liant cuit 5 h à 1 050 °C comme précédemment, en partant d'un mélange de 30 % de goudron de houille et de 70 % de silicium métal en poudre (grains < 300 mesh, c'est-à-dire < 0,05 mm).

La résistance à l'écrasement du liant cuit ainsi obtenu a été trouvée égale à 60,3 MPa.

Un examen micrographique (G = 1 400) a montré que les résidus carbonés adhéraient de façon intime aux grains de silicium dans ce liant cuit, et que ces grains de silicium y étaient à l'état métallique.

Cette bonne adhérence entre les grains de silicium à l'état métallique et les résidus carbonés dans le liant cuit ainsi préparé peut être transposée au cas des produits à base de grains réfractaires tels que des grains de carbure de silicium, par exemple au cas de l'échantillon C où l'addition de silicium a un effet remarquable sur la résistance à l'écrasement et la résistance à la traction. C'est ainsi l'amélioration de la qualité de la matrice enchâssant les grains réfractaires — matrice appelée encore dans ce texte « ciment » ou « liant cuit » — qui explique pour l'essentiel l'amélioration des caractéristiques du produit réfractaire.

## Exemple 3

Les essais comparatifs du tableau II portent sur des échantillons ⌀ 60 × h 100 mm à base de grains d'alumine calcinée, malaxés et comprimés comme dans l'exemple 1 et cuits 8 h à 1 030 °C sous couverte de granulés de carbone.

### Tableau II

| Repère | E | F | ⸳ G |
|---|---|---|---|
| type de produit réfractaire obtenu | alumine liée coke de brai | alumine liée coke de brai + Si | alumine + carbone liés coke de brai + Si |
| Composition du mélange de départ(% en masse) | | | |
| mesh    mm | | | |
| alumine<100 (<0,15) | 85 | 74,6 | 49 |
| carbone   -   (<0,2 ) | 0 | 0 | 22,5 |
| Si      <300 (<0,05) | 0 | 12,7 | 14,25 |
| Brai de houille | 15 | 12,7 | 14,25 |
| d   (g/cm$^3$) | 2,45 | 2,44 | 2,05 |
| $R_E$ (MPa) | 12,7 | 100,5 | 63,7 |

La comparaison des résultats obtenus sur les échantillons F et E, montre l'effet remarquable de l'addition de silicium sur la résistance à l'écrasement du produit réfractaire à base de grains d'alumine.

Dans l'échantillon G, une partie importante de l'alumine a été remplacée par du carbone anthracite (grains < 0,2 mm avec 45 % d'inférieure à 74 μm) et on a tout de même obtenu une résistance à l'écrasement de 63,7 MPa.

## Exemple 4

Une série de dalles de bordure de 550 × 350 × 100 mm de 47 kg, destinées à des cuves d'électrolyse pour la production d'aluminium ont été préparées de la façon suivante (échantillon H) :

|  |  |  |
|---|---|---|
| mélange de départ | SiC 14/24 (0,59 à 1,16 mm) | 42,8 % en masse |
|  | SiC < 100 (< 0,15 mm) | 42,8 % |
|  | Si < 300 (< 0,05 mm) | 4,4 % |
|  | Brai de houille | 10 % |

malaxage pendant 45 mm à 150 °C
mise en forme par pilonnage à 150 °C
cuisson par maintien à 1 050 °C pendant 5 h, sous couverte de granulés en carbone, dans un four classique de cuisson d'électrodes de carbone.

Les résultats des examens sur le produit réfractaire obtenu sont les suivants :
a) d = 2,4 g/cm$^3$ — $R_E$ = 74,5 MPa — $R_T$ = 9,0 MPa — $\rho$ = 182 milliohm × cm, conductibilité thermique à 80 °C = 31W · m$^{-1}$K$^{-1}$ — coefficient de dilatation 3,80 × 10$^{-6}$ · K$^{-1}$,
b) l'usure par oxydation a été testée sur une éprouvette Ø 22 × h 50 mm par la méthode suivante : chauffage jusqu'à 550 °C sous balayage d'azote, puis à 550 °C soufflage d'air à débit constant pendant 1 heure, puis refroidissement sous azote et pesée. L'éprouvette « H » a subi dans ce test une perte de poids de 0,5 % alors que l'éprouvette-témoin en carbone (comme l'échantillon repère « A » de l'exemple 1) a subi une perte de poids de 20 %,
c) enfin on a testé sur une autre éprouvette prélevée dans l'échantillon H la tenue au bain fluoré : il s'agit d'un test d'électrolyse dans un bain de cryolithe fondue + alumine pendant 5 h. L'éprouvette n'avait pas d'usure visible à l'œil après ce test, ce résultat a été jugé excellent.

L'ensemble des résultats concernant l'échantillon H joint aux résultats déjà notés pour l'échantillon C montre que ce nouveau type de réfractaire à base de grains de carbure de silicium, dont le liant contient des résidus carbonés et du silicium en poudre à l'état métallique, est particulièrement intéressant pour les bordures des cellules d'électrolyse d'aluminium.
Le coefficient de dilatation mesuré sur H est voisin de celui des blocs carbonés, ce qui permet la réalisation et l'utilisation dans les cuves d'électrolyse de l'aluminium de blocs réfractaires mixtes, par exemple de blocs dont une partie du volume du côté intérieur à la cuve est constituée par le produit au carbure de silicium contenant du silicium en poudre selon l'invention et dont l'autre partie du volume située du côté extérieur à la cuve est constituée par un produit carboné classique, la liaison entre les deux parties étant réalisée par une des méthodes de liaison connues de l'homme du métier, par exemple par compression simultanée des couches des deux mélanges de départ (voir exemples 11 et 12).

## Exemple 5

Un échantillon I de Ø 235 × h 205 mm de même composition que l'échantillon H a été malaxé et mis en forme de la même façon, puis a été cuit par maintien à 1 150 °C pendant 5 h, sous couverte de granulés de carbone, dans le même four de cuisson d'électrodes de carbone.
Les caractéristiques suivantes ont été observées sur cet échantillon I : d = 2,39 g/cm$^3$ et $R_E$ = 70,6 MPa.
Les résistances à l'écrasement $R_E$ et I cuit à 1 150 °C et de H cuit à 1 050 °C sont voisines, ce qui montre que la cuisson du produit réfractaire de l'invention peut être effectuée à une température de produit de 1 150 °C, température maximale habituelle pour la cuisson des électrodes de carbone, en conservant une valeur élevée de $R_E$.

## Exemple 6

Le tableau III ci-après concerne des essais comparatifs portant sur des échantillons Ø 60 × h 100 mm malaxés et pressés comme dans l'exemple 1 et cuits dans des conditions différentes :

(Voir tableau III p. 8)

7

Tableau III

Réfractaires « SiC lié coke de brai + Si »

| Repère | J | K | L |
|---|---|---|---|
| Traitement de cuisson | 950°C-5h | 1050°C-5h | 570°C-5h +1050°C-5h |
| Composition du mélange de départ (%en masse) | | | |
| mesh    mm | | | |
| SiC  14/24 (0,59à1,16) | 40,5 | 40,5 | 42,8 |
| SiC  <100  (< 0,15) | 40,5 | 40,5 | 42,8 |
| Si  <300  (< 0,05) | 7 | 7 | 4,5 |
| Brai de houille | 0 | 0 | 10 |
| Goudron de houille | 12 | 12 | 0 |
| d  (g/cm$^3$) | 2,22 | 2,27 | 2,23 |
| $R_E$  (MPa) | 21,1 | 40,3 | 50,0 |
| $R_T$  (MPa) | 1,4 | 6,9 | non mesuré |
| ρ  (milliohm x cm) | non mesuré | non mesuré | 250 |

En ce qui concerne la résistance à l'écrasement $R_E$, les échantillons J-K-L sont tous nettement meilleurs que l'échantillon D de l'exemple 1 préparé sans ajout de poudre de silicium. L'échantillon J cuit à 950 ºC est moins bon que l'échantillon K cuit à 1 050 ºC, et L cokéfié à 570 ºC puis cuit à 1 050 ºC est un peu meilleur que K. Cet exemple montre d'abord que, dans l'intervalle des températures habituelles de cuisson des électrodes de carbone « 900 ºC à 1 150 ºC », les températures basses ont déjà de l'intérêt pour la cuisson du produit réfractaire de l'invention, et que en tenant compte du résultat de l'exemple 5 l'intervalle entier « 900 ºC à 1 150 ºC » est à retenir. Cet exemple montre encore, en association avec les exemples précédents, qu'un intervalle restreint centré sur 1 050 ºC tel que « 1 000 ºC à 1 090 ºC » est préférable pour la qualité du produit réfractaire de l'invention.

Exemple 7

Le tableau IV concerne un essai comparatif portant sur des échantillons Ø 60 × h 100 mm malaxés et comprimés comme dans l'exemple 1, et cuits 5 h à 1 050 ºC, dont les mélanges de départ comprennent à la fois du carbure de silicium et de l'anthracite, ce dernier en grains < 0,2 mm avec 45 % de fines inférieures à 74 μm.

Tableau IV

Réfractaires au SiC + anthracite

| Repère | M | N |
|---|---|---|
| Composition du mélange de départ(%en masse) | | |
| mesh    (mm) | | |
| SiC  14/24  (0,59 à 1,16) | 40,4 | 40,4 |
| anthracite  –  (< 0,2 ) | 40,3 | 40,3 |
| Si  < 300  (< 0,05 ) | 4,3 | 0 |
| SiC  < 400  (< 0,037) | 0 | 4,3 |
| Brai de houille | 15 | 15 |
| d  (g/cm$^3$) | 1,86 | 1,81 |
| $R_E$  (MPa) | 45,1 | 23,7 |
| $R_T$  (MPa) | 2,1 | 1,3 |
| ρ  (milliohm x cm) | 11 | 11 |

La comparaison des caractéristiques des échantillons M et N montre l'effet bénéfique de l'addition de silicium en poudre au mélange de départ dans le cas de cette composition à base de grains réfractaires de différentes qualités, comprenant à la fois des grains de carbure de silicium et des grains de carbone (anthracite).

## Exemple 8

On a confectionné une série de blocs de 160 × 160 millimètres de section et de 800 mm de long, destinés au garnissage de hauts-fourneaux, par filage d'une pâte ayant la composition suivante, dans laquelle le grain réfractaire est composé de SiC et de produit carboné :

|  | % en poids |
|---|---|
| grains d'anthracite 11/2-4 mesh (5-13) mm | 30,3 |
| grains d'anthracite, 4/10 (1,5-5 mm) | 17,6 |
| carbure de silicium 100 mesh (< 0,15 mm) | 11,3 |
| poudre carbonée | 12,2 |
| graphite naturel | 8,4 |
| silicium métal | 4,2 |
| brai | 16,0 |

Après cuisson de 48 heures à 1 080 °C, on a obtenu les caractéristiques suivantes :

$d = 1,70$ g/cm$^3$

porosité de rayon $> 1$ µm : 2,5 % en volume
$R_E = 39,2$ MPa
$R_T = 5,9$ MPa
$\rho = 4,2$ m $\Omega \cdot$ cm
$\lambda = 13,5$ W $\cdot$ m$^{-1}$K$^{-1}$

Résistance à l'oxydation, 1 h à 550 °C = 0,8 % (perte de poids).
On a procédé, sur ces blocs, à des tests de résistance à la fonte liquide, dans les conditions suivantes :

a) résistance à la pénétration de la fonte liquide, sous pression : on constitue un creuset en matériau à tester, on le remplit de 100 g de fonte liquide, à 1 500 °C, et on exerce une pression croissante de gaz inerte jusqu'à ce que les premières gouttes de fonte commencent à suinter au travers du creuset. Le résultat est exprimé par la pression à partir de laquelle le suintement se produit. Sur les matériaux standards, cette pression $R_p$ est de 0,02 MPa ;

b) érosion par la fonte à 1 500 °C : un barreau en matériau à tester et un barreau témoin en matériau standard sont immergés dans de la fonte à 1 500 °C, sous agitation, pendant 4 heures. Le résultat est exprimé en volume érodé par rapport au volume initial. Sur les matériaux standards, cette érosion E est de 22 %.

Dans le matériau de cet exemple 8, on a trouvé :
$R_p > 0,6$ MPa
$E \quad 15,5$ %

## Exemple 9

On a confectionné une série de blocs de 160 × 160 mm de section et 800 mm de long, par filage d'une pâte ayant la composition suivante, dans lequel le grain réfractaire est composé de SiC et de produits carbonés :

|  | % en poids |
|---|---|
| grains d'anthracite 1 1/2-4 mesh (5-13 mm) | 24,6 |
| grains 4/10 mesh (1,5-5 mm) | 14,4 |
| SiC (0,15) | 14,0 |
| poudre carbonée | 21,6 |
| graphite naturel | 4,2 |
| silicium métal | 5,9 |
| brai | 15,3 |

Après cuisson de 48 h à 1 080 °C, on a obtenu les caractéristiques suivantes :

d = 1,75 g/cm³
porosité > 1 μm = 2,7 %
ρ 4,8 m Ω · cm
$R_E$ = 40 MPa
$R_T$ = 5,9 MPa
résistance à l'oxydation = 0,7 % (telle que définie dans l'exemple 4)
λ = 11 Wm⁻¹K⁻¹
test fonte ⟩  $R_p$ : > 0,6 MPa
liquide    ⟩  E : 17,5 %

## Exemple 10

On a confectionné une série de blocs de 165 × 165 mm de section et de 800 mm de long par filage d'une pâte ayant la composition suivante, dans lequel la totalité du grain réfractaire est constitué de produits carbonés :

| | % en poids |
|---|---|
| grain d'anthracite 1 1/2-4 mesh (5-13 mm) | 29,3 |
| grain d'anthracite 4-10 mesh (1,5-5 mm) | 16,7 |
| poudre carbonée | 25,8 |
| graphite naturel | 8,4 |
| silicium métal | 4,2 |
| brai | 15,6 |

Après cuisson de 48 h à 1 080 °C, on a obtenu les caractéristiques mécaniques suivantes :
d : 1,63
porosité > 1 μm : 3,5 %
ρ : 3,9 · Ω · cm
$R_E$ : 44 MPa
$R_T$ : 6,3 Mpa
résistance à l'oxydation : 1,5 %
λ : 10,0 Wm⁻¹K⁻¹
résistance à la pénétration de la fonte liquide : > 0,6 MPa
érosion par la fonte liquide : 14 %

## Exemple 11

On a préparé une série de dalles mixtes de bordures de 668 × 275 × 120 mm; destinées à des cuves d'électrolyse, par malaxage séparé de deux mélanges « M' » et « 0 » (voir tableau n° 5) et pilonnage de deux masses égales de M' et de O (O étant ajouté sur M'), puis cuisson pendant 5 heures à 1 050 °C sous couverture de granulés de carbone. La résistivité électrique et les caractéristiques mécaniques ont été mesurées sur des éprouvettes prélevées dans le sens parallèle au pilonnage (épaisseur), elles tiennent donc compte de la jonction entre M' et O.

10

Tableau V

Mélanges de départ et caractéristiques de l'échantillon mixte

| Repère | | | face M' froide | face O chaude |
|---|---|---|---|---|
| Mélange de départ | | | % en | masse |
| | mesh | (mm) | | |
| SiC | 14/24 | (0,59 à 1,16) | 40,4 | 41,8 |
| anthracite | - | ( < 0,2 ) | 40,3 | 0 |
| Si | < 300 | ( < 0,05) | 4,3 | 4,4 |
| SiC | < 300 | ( < 0,15) | ,0 | 41,8 |
| brai de houille | | | 15 | 12 |
| | | | Caractéristiques de M'O | |
| d | (g/cm³) | | 1,97 | |
| $R_E$ | (MPa) | | 45,1 | |
| $R_T$ | (MPa) | | 4,5 | |
| ρ | (milliohm cm) | | 68 | |

L'échantillon mixte « M'O » testé ici est composé ainsi pour moitié d'un produit « M' » — de même composition que « M » — dont le mélange de départ contient à la fois du carbure de silicium et de l'anthracite avec une addition de poudre de silicium et pour l'autre moitié d'un produit « O » dont le mélange de départ est à base de carbure de silicium avec également une addition de poudre de silicium. La résistance mécanique de la liaison obtenue est excellente.

On obtient de même des liaisons satisfaisantes dans le cas de blocs mixtes associant un produit réfractaire selon l'invention, dont le liant contient notamment des résidus carbonés et du silicium en poudre à l'état métallique, et un produit réfractaire obtenu à partir d'un mélange de départ de composition différente, ce deuxième produit réfractaire pouvant être par exemple un produit obtenu à partir d'un mélange de carbone et de produits carbonés.

Exemple 12

On a préparé une série de briques mixtes de 668 × 275 × 120 mm par malaxage séparé de deux mélanges P et Q (voir tableau n° 6), et pilonnage de deux masses égales de P et Q, puis cuisson pendant 5 heures à 1 050 °C sous couverture de granulés de carbone.

La résistivité électrique et les caractéristiques mécaniques ont été mesurées sur des éprouvettes prélevées dans le sens parallèle au pilonnage (épaisseur), elles tiennent donc compte de la jonction entre P et Q, le matériau P étant du côté dit « face froide » et le matériau « Q » du côté « face chaude ».

Tableau VI

| Repère | | | P | Q |
|---|---|---|---|---|
| Mélange de départ | | | % en | masse |
| | mesh | (mm) | | |
| anthracite | 1 1/2 - 4 | ( 5 - 13) | 31,0 | - |
| | 4 -10 | (1,5- 5) | 18,0 | - |
| graphite naturel | | | 8,6 | 4,4 |
| poudre carbonée | | | 12,5 | - |
| SiC | 14 - 24 | (0,59-1,16) | - | 46,2 |
| SiC | < 100 | (< 0,15) | 11,6 | 33,0 |
| Si | < 300 | (< 0,05) | 4,3 | 4,4 |
| Brai de houille | | | 14,0 | 12,0 |

**0 128 165**

Des échantillons ont été pris dans le sens de la longueur, pour tenir compte de la jonction PQ. Comme dans l'exemple précédent, la résistance mécanique de la jonction est excellente.

On a mesuré les caractéristiques suivantes :

$d$ = 1,95
$R_E$ = 40 MPa
$R_T$ = 4 MPa

## Revendications

1. Produit réfractaire cuit, à base de grains réfractaires et de liant, caractérisé en ce qu'il est constitué après cuisson, sous couverture de grains carbonés, entre 950 et 1 150 °C, par une charge de grains réfractaires appartenant au groupe comprenant les produits carbonés tels que l'anthracite, le graphite naturel, le graphite artificiel, le carbone amorphe, le coke, les composés réfractaires « RHM » (refractory hard metals) tels que le carbure de silicium, et les oxydes réfractaires tels que l'alumine, le corindon, la magnésie, la silice, l'oxyde de chrome, pris séparément, en mélange ou en combinaison, ces grains étant solidarisés par un ciment à base de produit carboné cokéfié et de silicium métal en poudre, la teneur en silicium métal étant comprise entre 1 et 15,8 % et, de préférence, entre 3 et 10,5 %.

2. Produit réfractaire, selon revendication 1, caractérisé en ce que la charge de grains réfractaires est constituée en totalité de grains de produit carboné.

3. Produit réfractaire, selon revendication 1, caractérisé en ce que la charge de grains réfractaires est constituée par 10 à 20 % en poids de grains en RHM, tel que le carbure de silicium et par 90 à 80 % en poids de grains en produit carboné.

4. Produit réfractaire, selon revendication 1, caractérisé en ce que la charge de grains réfractaires est constituée par 45 à 100 % de grains en RHM, tel que le carbure de silicium et par 55 à 0 % de grains carbonés.

5. Produit réfractaire, selon revendication 3 ou 4, caractérisé en ce qu'au moins une partie des grains en RHM est remplacée par des grains en oxyde réfractaire.

6. Produit réfractaire, selon revendication 3 ou 4, caractérisé en ce qu'au moins une partie des grains carbonés est remplacée par des grains en oxyde réfractaire.

7. Bloc réfractaire mixte, caractérisé en ce qu'une partie, par exemple une face, est constituée par un premier produit réfractaire, l'autre partie, par exemple l'autre face, étant constituée par un second produit réfractaire, l'un au moins de ces deux produits réfractaires ayant une composition selon l'une quelconque des revendications 1 à 6.

8. Bloc réfractaire mixte, selon revendication 7, caractérisé en ce qu'il comporte, en outre, au moins une couche intermédiaire en un troisième produit réfractaire, dont une des propriétés physiques, par exemple le coefficient de dilatation, a une valeur intermédiaire entre la même propriété physique du premier et du second produit réfractaire.

9. Procédé de fabrication d'un produit réfractaire, objet des revendications 1 à 8, à base de grains réfractaires et de liant, caractérisé en ce que l'on prépare, par malaxage, un mélange de départ constitué de :

| | |
|---|---|
| charge de grains réfractaires | 70 à 95 % en poids |
| brai, goudron, résine thermodurcissable, ou liant organique cokéfiable | 4 à 20 % en poids |
| silicium métal en poudre | 1 à 15 % en poids |

Les grains réfractaires appartenant au groupe comprenant les produits carbonés tels que l'anthracite, le graphite naturel, le graphite artificiel, le carbone amorphe, le coke, les composés réfractaires « RHM » tels que le carbure de silicium, et les oxydes réfractaires tels que l'alumine, le corindon, la magnésie, la silice, l'oxyde de chrome, pris séparément, en mélange ou en combinaison, en ce qu'on met le mélange en forme en exerçant une pression par exemple par filage, pressage, compression isostatique, vibrotassage ou pilonnage, et en ce qu'on effectue la cuisson entre 950 et 1 150 °C, et, de préférence, entre 1 000 et 1 090 °C, sous couverture de granulés de carbone.

10. Procédé de fabrication, selon revendication 9, caractérisé en ce que le mélange de départ comporte, de préférence :

| | |
|---|---|
| charge de grains réfractaires | 75 à 90 % en poids |
| brai, goudron, résine thermodurcissable, ou liant organique cokéfiable | 6 à 14 % en poids |
| silicium métal en poudre | 3 à 10 % en poids |

11. Application du produit réfractaire, objet de l'une quelconque des revendications 1 à 8, à la confection des garnissages latéraux des cuves pour la production d'aluminium par électrolyse ignée, de garnissage de hauts-fourneaux et de fours électriques pour l'électrométallurgie.

12

**Claims**

1. A fired refractory product based on refractory grains and binder characterised in that after firing under a covering of carbonaceous grains at between 950 and 1 150 °C it is formed by a charge of refractory grains belonging to the group comprising carbonaceous substances such as anthracite, natural graphite, artificial graphite, amorphous carbon, coke, the refractory compounds « RHM » (refractory hard metals) such as silicon carbide and refractory oxides such as alumina, corundum, magnesia, silica, chromium oxide, taken separately, as a mixture or in combination, said grains being fixed together by a cement based on a coked carbonaceous substance and metal silicon in powder form, the content of metal silicon being between 1 and 15.8 % and preferably between 3 and 10.5 %.

2. A refractory product according to claim 1 characterised in that the charge of refractory grains is entirely formed by grains of carbonaceous substance.

3. A refractory product according to claim 1 characterised in that the charge of refractory grains is formed by 10 to 20 % by weight of grains of RHM such as silicon carbide and 90 to 80 % by weight of grains of carbonaceous substance.

4. A refractory product according to claim 1 characterised in that the charge of refractory grains is formed by 45 to 100 % of grains of RHM such as silicon carbide and 55 to 0 % of carbonaceous grains.

5. A refractory product according to claim 3 or claim 4 characterised in that at least a portion of the grains of RHM is replaced by grains of refractory oxide.

6. A refractory product according to claim 3 or claim 4 characterised in that at least a portion of the carbonaceous grains is replaced by grains of refractory oxide.

7. A mixed refractory block characterised in that a portion, for example a face, is formed by a first refractory product, the other portion, for example the other face, being formed by a second refractory product, one at least of said two refractory products being of a composition according to any one of claims 1 to 6.

8. A mixed refractory block according to claim 7 characterised in that it further comprises at least one intermediate layer of a third refractory product, of which one of the physical properties, for example the coefficient of expansion, is of a value intermediate between the same physical property of the first refractory product and the second refractory product.

9. A process for the production of a refractory product according to claims 1 to 8 based on refractory grains and binder characterised by preparing, by mixing, an initial mixture formed by :

| | |
|---|---|
| charge of refractory grains | 70 to 95 % by weight |
| pitch, tar, thermosetting resin or cokable organic binder | 4 to 20 % by weight |
| metal silicon in powder form | 1 to 15 % by weight |

the refractory grains belonging to the group comprising carbonaceous substances such as anthracite, natural graphite, artificial graphite, amorphous carbon, coke, the refractory compounds « RHM » such as silicon carbide and refractory oxides such as alumina, corundum, magnesia, silica, chromium oxide, taken separately, as a mixture or in combination, shaping the mixture by applying a pressure for example by extrusion, pressing, isostatic compression, vibro-compacting or tamping, and effecting the firing operation at between 950 and 1 150 °C and preferably between 1 000 and 1 090 °C, under a covering of carbon granules.

10. A process according to claim 9 characterised in that the initial mixture preferably comprises :

| | |
|---|---|
| charge of refractory grains | 75 to 90 % by weight |
| pitch, tar, thermosetting resin or cokable organic binder | 6 to 14 % by weight |
| metal silicon in powder form | 3 to 10 % by weight |

11. Use of the refractory product according to any one of claims 1 to 8 for the production of side claddings of tanks for the production of aluminium by igneous electrolysis, and cladding for blast furnaces and electric furnaces for electrometallurgy.


**Patentansprüche**

1. Gebranntes feuerfestes Erzeugnis auf Basis von feuerfesten Körnern und Bindemittel, dadurch gekennzeichnet, daß es, nach Brennen unter Abdeckung durch kohlenstoffhaltige Körner zwischen 950 und 1 150 °C, aus einer Füllung von feuerfesten Körnern besteht, die zur Gruppe gehören, die die kohlenstoffhaltigen Stoffe, wie den Anthrazit, den natürlichen Graphit, den künstlichen Graphit, den amorphen Kohlenstoff, den Koks, die feuerfesten « RHM » (feuerfeste harte Metalle)-Verbindungen, wie das Siliziumkarbid, und die feuerfesten Oxide, wie das Aluminiumoxid, den Korund, das Magnesiumoxid, das Siliziumdioxid, das Chromoxid, einzeln, in Mischung oder in Kombination umfaßt, und daß diese Körner durch ein Bindemittel auf Basis eines verkokten kohlenstoffhaltigen Erzeugnisses und von Siliziummetall in Pulverform verbunden sind, wobei der Gehalt an Siliziummetall im Bereich von 1 bis 15,8 % und vorzugsweise von 3 bis 10,5 % liegt.

2. Feuerfestes Erzeugnis nach Anspruch 1, dadurch gekennzeichnet, daß die Füllung feuerfester Körner völlig aus Körnern von kohlenstoffhaltigem Stoff besteht.

3. Feuerfestes Erzeugnis nach Anspruch 1, dadurch gekennzeichnet, daß die Füllung feuerfester Körner aus 10 bis 20 Gew.% Körnern aus RHM, wie Siliziumkarbid, und aus 90 bis 80 Gew.% Körnern von kohlenstoffhaltigem Stoff besteht.

4. Feuerfestes Erzeugnis nach Anspruch 1, dadurch gekennzeichnet, daß die Füllung feuerfester Körner aus 45 bis 100 Gew.% Körnern aus RHM, wie Siliziumkarbid, und aus 55 bis 0 Gew.% kohlenstoffhaltigen Körnern besteht.

5. Feuerfestes Erzeugnis nach Anspruch 3 oder 4, dadurch gekennzeichnet, daß wenigstens ein Teil der Körner aus RHM durch Körner aus feuerfestem Oxid ersetzt ist.

6. Feuerfestes Erzeugnis nach Anspruch 3 oder 4, dadurch gekennzeichnet, daß wenigstens ein Teil der kohlenstoffhaltigen Körner durch Körner aus feuerfestem Oxid ersetzt ist.

7. Feuerfester gemischter Block, dadurch gekennzeichnet, daß ein Teil, z. B. eine Außenseite, aus einem ersten feuerfesten Erzeugnis besteht, der andere Teil, z. B. die andere Außenseite, aus einem zweiten feuerfesten Erzeugnis besteht und wenigstens eines dieser beiden feuerfesten Erzeugnisse eine Zusammensetzung nach irgendeinem der Ansprüche 1 bis 6 hat.

8. Feuerfester gemischter Block nach Anspruch 7, dadurch gekennzeichnet, daß er außerdem wenigstens eine Zwischenschicht aus einem dritten feuerfesten Erzeugnis aufweist, dessen eine der physikalischen Eigenschaften, beispielsweise der Ausdehnungskoeffizient, einen Zwischenwert zwischen derselben physikalischen Eigenschaft des ersten und des zweiten feuerfesten Erzeugnisses hat.

9. Verfahren zur Herstellung eines feuerfesten Erzeugnisses, das Gegenstand der Ansprüche 1 bis 8 ist, auf Basis von feuerfesten Körnern und Bindemittel, dadurch gekennzeichnet, daß man durch Kneten ein Ausgangsgemisch herstellt, das aus 70 bis 95 Gew.% Füllung von feuerfesten Körnern, 4 bis 20 Gew.% Pech, Teer, wärmehärtbarem Harz oder verkokbarem organischem Bindemittel und 1 bis 15 Gew.% Siliziummetall in Pulverform besteht, welche feuerfesten Körner zur Gruppe gehören, die die kohlenstoffhaltigen Stoffe, wie den Anthrazit, den natürlichen Graphit, den künstlichen Graphit, den amorphen Kohlenstoff, den Koks, die feuerfesten « RHM »-Verbindungen, wie das Siliziumkarbid, und die feuerfesten Oxide, wie das Aluminiumoxid, den Korund, das Magnesiumoxid, das Siliziumdioxid, das Chromoxid, einzeln, in Mischung oder in Kombination umfaßt, und daß man das Gemisch in Form bringt, indem man einen Druck, z. B. durch Strangpressen, Pressen, isostatische Verdichtung, Schwingverdichtung oder Stampfen, ausübt, und daß man das Brennen im Bereich von 950 bis 1 150 °C und vorzugsweise von 1 000 bis 1 090 °C unter Abdeckung durch Kohlenstoffkörner durchführt.

10. Herstellungsverfahren nach Anspruch 9, dadurch gekennzeichnet, daß das Ausgangsgemisch vorzugsweise 75 bis 90 Gew.% Füllung von feuerfesten Körnern, 6 bis 14 Gew.% Pech, Teer, wärmehärtbares Harz oder verkokbares organisches Bindemittel und 3 bis 10 Gew.% Siliziummetall in Pulverform aufweist.

11. Verwendung des feuerfesten Erzeugnisses, das Gegenstand irgendeines der Ansprüche 1 bis 8 ist, zur Anfertigung der seitlichen Auskleidungen der Wannen für die Aluminiumerzeugung durch Schmelzflußelektrolyse, einer Auskleidung von Hochöfen und von elektrischen Öfen für die Elektrometallurgie.